# FASCICULE DE BREVET EUROPEEN

(11) **EP 0 856 963 B1**
(45) Date de publication et mention de la délivrance du brevet: **17.08.2005**
(21) Numéro de dépôt: 98400186.7
(22) Date de dépôt: 29.01.1998
(51) Int. Cl.: H04J 3/12, H04J 3/07

(54) **Procédé de transmission d'une voie de service dans une trame plésiochrone de ladite voie de service et système de transmission correspondant**
Verfahren zum Übertragen eines Dienstkanals in einem mit dem genannten Dienstkanal plesiochronen Rahmen und entsprechende Übertragungsvorrichtung
Method for transmitting a service channel in a frame plesiochronous to said service channel and related transmission system

(30) Priorité: 30.01.1997 FR 9700992
(43) Date de publication de la demande: 05.08.1998
(73) Titulaire: ALCATEL, 75008 Paris (FR)
(72) Inventeur: Debray, Bertrand, 78600 Maisons Laffitte (FR)
(74) Mandataire: Hedarchet, Stéphane

(56) Documents cités:
- DE-A- 2 814 001
- DE-A- 3 717 315
- FR-A- 2 352 453
- US-A- 3 995 120

## Description

Le domaine de l'invention est celui de la transmission de données numériques, notamment par voie hertzienne. Plus précisément, la présente invention concerne un procédé permettant de transmettre une voie de service dans des trames plésiochrones de cette voie de service, ainsi qu'un système de transmission correspondant.

On entend par plésiochrones deux signaux dont le rapport des fréquences a une partie fractionnaire irrationnelle. On se placera dans la suite de cette description dans le cadre d'un système de transmission, par exemple par faisceaux hertziens, où deux types de données numériques sont transmises entre un émetteur et un récepteur. Cet émetteur et ce récepteur peuvent être soit des terminaisons de la chaîne de transmission, soit des répéteurs installés entre ces terminaisons.

Les deux types de données numériques sont les suivants : des données client, aussi appelées données nobles, et des données de service. Les données client constituent une voie noble et sont transmises dans une trame hertzienne qui est plésiochrone de la voie de service. A titre d'exemple, la voie noble a un débit de 40 Mbps (Mégabits par seconde) alors que la voie de service a un débit de 64 Kbps.

La voie de service répond par exemple à la recommandation G703 du CCITT sur les précisions des horloges et les gabarits des impulsions. Cette voie de service contient classiquement des données de supervision. Elle peut également contenir des données de phonie, par exemple issues d'un codage MIC de données de parole.

Il est connu d'insérer les données de la voie de service dans des emplacements réservés des trames hertzienne véhiculant, hors ces emplacements réservés, les données nobles. L'extraction des données de la voie de service, au niveau du récepteur de ces trames hertziennes, est réalisée après synchronisation trame en connaissant la position de ces emplacements réservés. Cependant, lorsque les données de la voie de service sont constituées de blocs de longueur prédéterminée (par exemple d'octets issus du codage MIC), il est nécessaire de fournir au récepteur cette horloge bloc (horloge octet) afin qu'il puisse récupérer les blocs émis. Dans ce cas, il est connu de transmettre cette horloge bloc sur une voie auxiliaire.

L'inconvénient de cette solution est qu'elle nécessite la présence de cette voie auxiliaire pour la transmission de l'horloge bloc et les performances du système en terme de rendement de transmission s'en trouvent réduites.

La présente invention a notamment pour objectif de pallier cet inconvénient. Le document DE 28 14 001 décrit un procédé selon la préambule de la revendication 1.

Plus précisément, l'invention a pour objectif de permettre la transmission de blocs de données de la voie de service dans des trames hertziennes plésiochrones de cette voie de service, où l'horloge bloc permettant de récupérer ces blocs de données n'est pas transmise par une voie auxiliaire, c'est à dire où l'horloge bloc peut être récupérée au niveau du récepteur par simple analyse des trames reçues.

Cet objectif, ainsi que d'autres qui apparaîtront par la suite, est atteint grâce à un procédé d'insertion d'une voie de service dans des trames plésiochrones de la voie de service, le procédé consistant également à transmettre une horloge bloc entre un émetteur et un récepteur de cette trame, le procédé consistant à réserver dans la trame, au niveau de l'émetteur, au moins un emplacement destiné à véhiculer des données de la voie de service.

Selon l'invention, ce procédé consiste à :
- au niveau de l'émetteur :
   i - insérer des blocs de la voie de service dans ces emplacements en faisant précéder chacun des blocs par un nombre n1 prédéterminé de bits identiques, appelés start bits, et en respectant les règles suivantes :
      - en cas de non nécessité de bourrage des emplacements restants, reprendre le procédé à l'étape i pour un nouveau bloc ;
      - en cas de nécessité de bourrage des emplacements restants, faire suivre chacun des blocs par un nombre n2 de bits identiques, appelés stop bits, les stop bits étant différents des start bits, et reprendre le procédé à l'étape i pour un nouveau bloc ;
- au niveau du récepteur :
   - détecter la survenance régulière des start bits ou la survenance régulière des start bits précédés par les stop bits, afin de pouvoir décider de la présence des blocs dans les emplacements réservés et d'extraire ces blocs des emplacements réservés.

L'invention s'applique notamment à la transmission par voie hertzienne et concerne également un système de transmission dans lequel ce procédé est mis en oeuvre.

D'autres caractéristiques et avantages de l'invention apparaîtront à la lecture de la description suivante d'un mode de réalisation préférentiel, donné à titre illustratif et non limitatif, et des dessins annexés dans lesquels :
- la figure 1 est un schéma synoptique d'un étage de génération de trames hertziennes comprenant des blocs de données de voie de service insérés dans des emplacements réservés de ces trames hertziennes ;
- la figure 2 est un organigramme montrant le fonctionnement de l'étage de la figure 1 ;
- la figure 3 représente la succession des bits multiplexés MX destinés à être insérés dans les trames transmises selon l'invention ;
- la figure 4 est un schéma synoptique d'un étage permettant de récupérer ces blocs de données de voie de service dans les trames hertziennes.

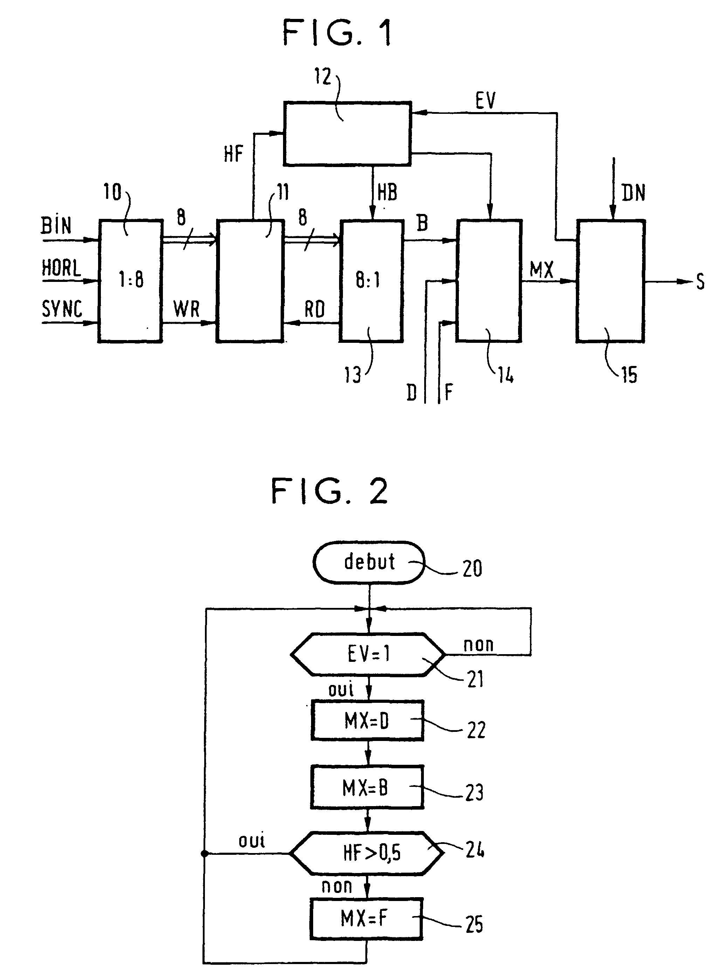

La figure 1 est un schéma synoptique d'un étage de génération de trames hertziennes comprenant des blocs de données de voie de service insérés dans des emplacements réservés de ces trames hertziennes.

L'étage de la figure 1 comporte un convertisseur série-parallèle 10 recevant en entrée les données binaires BIN de la voie de service à transmettre, une horloge bit HORL et une horloge bloc SYNC. On se placera dans la suite de cette description dans le cas où l'horloge SYNC est une horloge octet, c'est à dire que chaque bloc comporte huit bits (0 ou 1). Le convertisseur 10 fournit des octets et une instruction d'écriture WR (Write) à une mémoire tampon 11, par exemple constituée par une FIFO. Une écriture dans la mémoire 11 est donc effectuée régulièrement (à la cadence de l'horloge bloc SYNC), les données de la voie de service se présentant à un rythme HORL régulier. La mémoire 11 fournit sur une de ses sorties une information HF (Half Full) indiquant si elle est plus ou moins que moitié remplie. L'information HF est fournie à une machine d'état 12 recevant par ailleurs une information d'emplacement vide EV d'un module de génération de trame 15. Le module 15 reçoit d'une part les données nobles DN à transmettre et d'autre part des données multiplexées MX issues d'un multiplexeur 14 piloté par la machine d'état 12. La machine d'état 12 pilote également un convertisseur parallèle-série 13 lisant par un signal RD (Read) les octets stockés dans la mémoire tampon 11. Le pilotage du convertisseur 13 consiste à lui transmettre une horloge bit HB.

L'information HF est par exemple obtenue en comparant des pointeurs d'écriture et de lecture de la mémoire 11.

Le fonctionnement de cet étage est représenté dans l'organigramme de la figure 2 qui est un organigramme montrant le fonctionnement de l'étage de la figure 1.

L'étape 20 est une étape de début. A l'étape 21, il est testé si le signal EV indique l'existence d'un emplacement réservé dans la trame. Si non, le test est relancé et le module 15 de génération de trame fournit sur sa sortie S les données nobles DN. A l'apparition d'un emplacement réservé (étape 22), le module 15 de génération de trame fournit sur sa sortie les données MX issues du multiplexeur 14. A ce stade, la machine d'état 12 demande au multiplexeur 14 de fournir au module de génération de trame 15 un nombre n1 prédéterminé de bits identiques, appelés start bits. La valeur de n1 est par exemple égale à trois. Ces bits sont notés D sur la figure 1 et sont par exemple tous égaux à 0. En parallèle, la machine d'état 12 demande au convertisseur parallèle-série 13 de lire par l'instruction RD un octet de voie de service dans la mémoire 11. A l'étape 23, ces huit bits sont appliqués en série au multiplexeur 14 dont le signal de commande est modifié afin que ces bits de données de voie de service suivent immédiatement les n1 bits identiques.

A l'étape 24, la machine d'état 12 vérifie si le nombre d'octets mémorisés dans la mémoire 11 dépasse la moitié de la capacité globale de cette mémoire. Si la réponse est oui, il convient de vider la mémoire 11 plus rapidement et le procédé reprend à l'étape 21. Si la réponse est non, un nombre prédéterminé n2 de bits identiques (n2 est par exemple aussi égal à 3) notés F, appelés stop bits et différents des start bits D, sont placés dans la trame S en commandant le multiplexeur 14. Si les start bits D ont pour valeur 0, les stop bits F ont pour valeur 1 et réciproquement. Les nombres n1 et n2 peuvent être différents.

L'insertion de ces stop bits F à la suite d'un octet B correspond à une étape de bourrage de la trame hertzienne. Ce bourrage est conditionné par le remplissage de la mémoire 11 qui, rappelons-le, est effectué de manière régulière. La réalisation de ce bourrage permet de transmettre des blocs de voie de service dans des trames plésiochrones de cette voie de service.

Après l'insertion des stop bits F, le procédé reprend à l'étape 21.

Le procédé de l'invention mis en oeuvre au niveau d'un émetteur consiste donc à :
i - insérer des blocs de la voie de service dans des emplacements réservés des trames hertziennes en faisant précéder chacun des blocs par n1 start bits identiques, tout en respectant les règles suivantes :
   - en cas de non nécessité de bourrage des emplacements restants, reprendre le procédé à l'étape i pour un nouveau bloc ;
   - en cas de nécessité de bourrage des emplacements restants, faire suivre chacun des blocs par n2 stop bits, et reprendre le procédé à l'étape i pour un nouveau bloc.

Chaque trame S issue du module 15 de génération de trame est appliquée à des moyens de transmission de ces trames à l'attention d'un récepteur.

Le débit correspondant aux emplacements réservés dans les trames hertziennes doit être (8+n1)/8 fois supérieur au débit de la voie de service à insérer. Lorsque les blocs transmis ne sont pas des octets, la valeur 8 est à remplacer par le nombre de bits compris dans chaque bloc. Les emplacements réservés sont suffisamment nombreux pour éviter le débordement de la mémoire tampon 11.

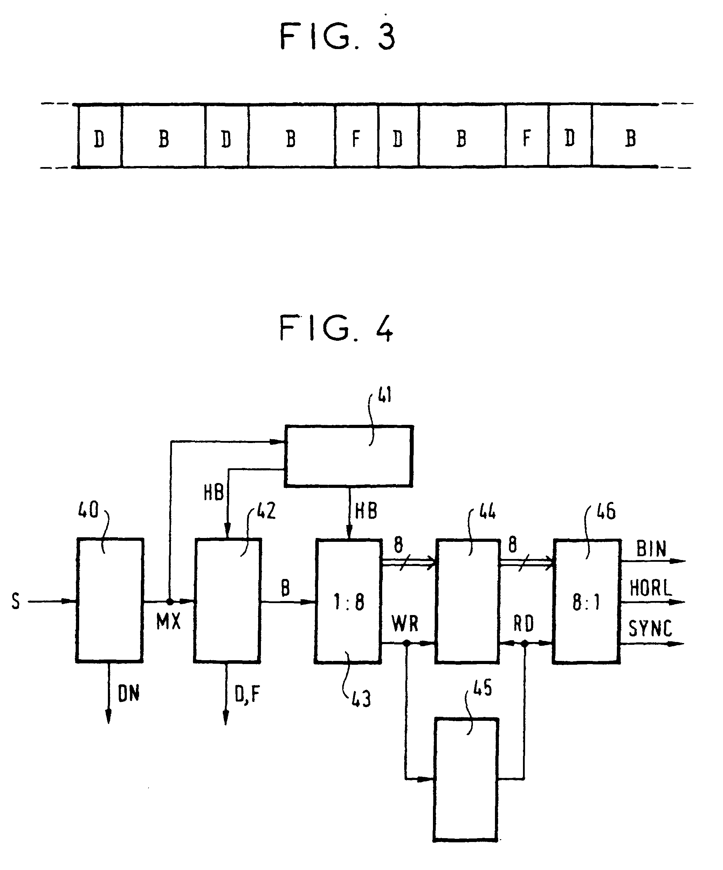

La figure 3 représente la succession des bits multiplexés MX destinés à être insérés dans les trames transmises.

Dans cette figure, les champs D correspondent à un ou plusieurs start bits, les champs B à des blocs de données de la voie de service et les champs F à un ou plusieurs stop bits. On voit que chaque bloc B est précédé d'un ou plusieurs start bits et que des stop bits sont éventuellement insérés après des blocs, en fonction du bourrage nécessaire.

Comme il sera vu par la suite, la survenance régulière des start bits ou la survenance régulière des start bits précédés par les stop bits est détectée au niveau du récepteur des trames S, afin de pouvoir décider de la présence des blocs de la voie de service dans les trames reçues et d'en extraire ces blocs.

La figure 4 est un schéma synoptique d'un étage permettant de récupérer ces blocs de données de voie de service dans les trames hertziennes. Un tel étage est prévu dans le récepteur des trames S.

Après démodulation du signal reçu, chaque trame S est appliquée à un démultiplexeur 40 séparant sur un chemin les données nobles DN et sur un autre chemin les données MX comprenant celles de la voie de service multiplexées avec les start bits et les éventuels stop bits. Ce démultiplexage est réalisé en connaissant la position des emplacements réservés et après synchronisation sur la trame reçue (à l'aide d'un mot de verrouillage de trame). Les données numériques MX ayant occupé les emplacements réservés sont notamment appliquées à une machine d'état 41 dont la principale fonction est de détecter la survenance régulière des start bits ou la survenance régulière des start bits précédés par les stop bits, afin de pouvoir décider de la présence des blocs dans les emplacements réservés et d'extraire ces blocs de ces emplacements réservés. Pour ce faire, la machine d'état 41 vérifie qu'un nombre n de fois consécutives des séquences similaires à celles de la figure 3 se reproduisent. Plus précisément, il est vérifié que n fois consécutives n1 start bits se reproduisent à intervalles réguliers (séparés par un octet) ou alors que si ces n1 start bits ne sont pas détectés aux emplacements attendus, il s'agit de n2 stop bits immédiatement suivis de n1 start bits. Les détections peuvent être réalisées par vote majoritaire si n1 et n2 sont impairs. Si n1 et n2 sont pairs et si le nombre de 1 détectés est égal au nombre de 0 détectés, il est décidé que des start bits sont présents et non pas des stop bits. Lorsque le test précité est vérifié n fois pour la même référence de synchronisation, c'est à dire sans décaler d'un temps bit les intervalles de temps d'observation, on décide que l'on est en présence de blocs de données de la voie de service et ces blocs peuvent alors être extraits du signal MX.

La machine d'état 41 génère alors un signal d'horloge bit HB appliqué à un second démultiplexeur 42 recevant également les données MX, ce démultiplexeur 42 extrayant bit à bit les octets de la voie de service. Les start bits D et stop bits F sont éliminés. L'horloge bit HB divisée par 8 constitue une horloge octet H8 appliquée à un convertisseur série-parallèle 43. Ce convertisseur 43 fournit les octets reçus et une instruction d'écriture WR à une mémoire tampon 44, par exemple constituée par une FIFO. L'instruction d'écriture WR est à la même fréquence que l'horloge octet H8 mais irrégulière dans le temps car seulement disponible lorsque les octets de la voie de service ont été identifiés. Afin de permettre une lecture régulière de cette mémoire tampon, une boucle à verrouillage de phase 45 (PLL) est prévue pour générer à partir du signal WR un signal d'horloge régulier RD.

Une telle PLL est par exemple décrite dans la demande de brevet français n°96.05496 déposée le 2 mai 1996. Dans cette demande de brevet, la PLL est de type numérique et fournit un signal d'horloge, appelé horloge récupérée, à partir d'un signal d'horloge de référence dans lequel des transitions sont absentes, appelé horloge trouée et de fréquence F_{ref}. Cette PLL comporte :
- un premier diviseur de fréquence par M recevant l'horloge trouée et fournissant un signal de fréquence F_{ref}/M ;
- un comparateur de phase à deux entrées, l'une des entrées recevant le signal de fréquence F_{ref}/M, l'autre des entrées recevant le signal de sortie d'un deuxième diviseur de fréquence par M, le comparateur de phase fournissant un signal d'erreur de phase ;
- un diviseur de fréquence par K d'un signal d'oscillateur local de fréquence F_{OL} recevant comme signal de commande le signal d'erreur de phase et fournissant un signal de fréquence Fₖ ;
- un additionneur-accumulateur recevant le signal d'oscillateur local de fréquence F_{OL} et fournissant un signal de sortie de fréquence F₀ égal à F_{OL}*p/q avec p/q le rapport de division de l'additionneur-accumulateur ;
- un mélangeur recevant le signal de fréquence Fₖ et le signal de fréquence F₀, le mélangeur fournissant un signal de fréquence Fₙ égal à F₀-Fₖ ;
- un diviseur de fréquence par N synchronisé par F_{OL} recevant le signal de fréquence Fₙ et fournissant l'horloge récupérée au deuxième diviseur de fréquence par M.

Bien entendu, d'autres boucles à verrouillage de phase peuvent être utilisées afin de générer une horloge régulière à partir d'un signal d'horloge présentant des absences de transitions.

Les octets lus dans la mémoire 44 sont ensuite appliqués à un convertisseur parallèle-série 46 restituant les bits BIN, l'horloge bit HORL et l'horloge octet SYNC de l'émission.

L'invention permet donc d'insérer des blocs d'une voie de service dans des trames hertziennes plésiochrones de cette voie de service. La voie de service est de préférence une voie de phonie nécessitant, de par le codage MIC, une récupération de blocs d'information.

Une application numérique est donnée ci-dessous :

On considère un débit tramé S de 40 Mbps et chaque trame a une longueur de 2048 bits. Le débit binaire BIN à insérer est de 64 Kbps, et on veut pouvoir récupérer une horloge octet. Pour un nombre n1 de start bits égal à trois, le débit d'informations à insérer dans les trames hertziennes est donc de 64.000*(8+3)/8, soit 88 Kbps. Chaque trame doit donc comporter 2048*88/40.000 = 4,5 soit 5 (nombre entier immédiatement supérieur) emplacements libres pour l'insertion des bits BIN de la voie de service et des start bits. On constate ici que les bits constituant un octet sont transmis dans des trames consécutives.

Bien entendu, la présente invention n'est pas limitée à la transmission de données par voie hertzienne et peut également s'appliquer à de la transmission par fibre optique ou par câble.

## Revendications

1. Procédé d'insertion d'une voie de service dans une trame plésiochrone de ladite voie de service, ledit procédé consistant également à transmettre une horloge bloc entre un émetteur et un récepteur de ladite trame, ledit procédé consistant à réserver dans ladite trame, au niveau dudit émetteur, au moins un emplacement destiné à véhiculer des données de ladite voie de service, **caractérisé en ce qu'**il consiste à :
• au niveau dudit émetteur :
i - insérer des blocs (B) de ladite voie de service dans ledit emplacement réservé en faisant précéder chacun desdits blocs (B) par un nombre n1 prédéterminé de bits identiques (D), appelés start bits, et en respectant les règles suivantes :
- en cas de non nécessité de bourrage de l'emplacement restant, reprendre ledit procédé à l'étape i pour un nouveau bloc (B) ;
- en cas de nécessité de bourrage de l'emplacement restant, faire suivre chacun desdits blocs (B) par un nombre n2 de bits identiques (F), appelés stop bits, lesdits stop bits (F) étant différents desdits start bits (D), et reprendre ledit procédé à l'étape i pour un nouveau bloc (B) ;
• au niveau dudit récepteur :
- détecter la survenance régulière desdits start bits (D) ou la survenance régulière desdits start bits (D) précédés par lesdits stop bits (F), afin de pouvoir décider de la présence desdits blocs (B) dans lesdits emplacements réservés et d'extraire ces blocs (B) desdits emplacements réservés.

2. Procédé selon la revendication 1, **caractérisé en ce que** ladite trame est une trame hertzienne.

3. Procédé selon l'une des revendications 1 et 2, **caractérisé en ce que** lesdits blocs (B) sont des octets.

4. Système de transmission d'une trame et d'une voie de service plésiochrone de ladite trame, ledit système assurant également la transmission d'une horloge bloc entre un émetteur et un récepteur de ladite trame, ladite horloge bloc permettant d'extraire des blocs de ladite voie de service de ladite trame, **caractérisé en ce qu'**il comprend :
• au niveau dudit émetteur :
- des moyens d'insertion (15), dans des emplacements réservés de ladite trame, de blocs (B) de ladite voie de service ;
- des moyens d'insertion (14, 15) d'un nombre n1 prédéterminé de bits identiques (D), appelés start bits, avant chacun desdits blocs (B), un bloc inséré (B) étant suivi soit par n1 autres start bits (D) en cas de non nécessité de bourrage de l'emplacement restant, soit par un nombre n2 de bits identiques (F), appelés stop bits, en cas de nécessité de bourrage de l'emplacement restant, lesdits stop bits (F) étant différents desdits start bits (D),
• au niveau dudit récepteur :
- des moyens de détection de la survenance régulière desdits start bits (D) ou de la survenance régulière desdits start bits (D) précédés par lesdits stop bits (F), lesdits moyens de détection fournissant une horloge bit (HORL), une horloge bloc (SYNC) ainsi que les données (BIN) de ladite voie de service.

5. Système selon la revendication 4, **caractérisé en ce que** ladite trame est une trame hertzienne.

## Claims

1. A method of inserting a service channel in a frame that is plesiochronous relative to said service channel, said method consisting also in transmitting a block clock between a transmitter and a receiver of said frame, said method consisting at said transmitter in reserving at least one location in said frame for conveying the data of said service channel, the method being **characterized in that** it consists in:
· at said transmitter:
i) inserting blocks (B) of said service channel into said reserved location, causing each of said blocks (B) to be preceded by a predetermined number n1 of identical bits (D) referred to as "start" bits, and to do so in compliance with the following rules:
· in the event of there being no need to pad out the remainder of the location, repeating said method at step i for a new block (B);
· in the event of it being necessary to pad out the remainder of the location, causing each of said blocks (B) to be followed by a number n2 of identical bits (F) referred to as "stop" bits, said stop bits (F) being different from said start bits (D), and repeating said method from step i for a new block (B); and
· at said receiver:
· detecting the regular arrival of said start bits (D) or the regular arrival of said start bits (D) preceded by said stop bits (F), so as to be able to decide that said blocks (B) are present in said reserved locations and to extract said blocks (B) from said reserved locations.

2. A method according to claim 1, **characterized in that** said frame is a radio frame.

3. A method according to claim 1 or 2, **characterized in that** said blocks (B) are bytes.

4. A system of transmitting a frame and a service channel that is plesiochronous relative to said frame, said system also transmitting a block clock between a transmitter and a receiver of said frame, said block clock making it possible to extract blocks of said service channel from said frame, the system being **characterized in that** it comprises:
· at said transmitter:
· means (15) for inserting blocks (B) of said service channel into reserved locations of said frame; and
· means (14, 15) for inserting a predetermined number n1 of identical bits (D) referred to as "start" bits before each of said blocks (B), an inserted block (B) being followed either by n1 further start bits (D) in the event of there being no need to pad out the remainder of the location, or else by a number n2 of identical bits (F) referred to as "stop" bits, in the event of it being necessary to pad out the remainder of the location, said stop bits (F) being different from said start bits (D); and
· at said receiver:
· detection means for detecting the regular arrival of said start bits (D) or the regular arrival of said start bits (D) preceded by said stop bits (F), said detection means supplying a bit clock (HORL), a block clock (SYNC), and the data (BIN) of said service channel.

5. A system according to claim 4, **characterized in that** said frame is a radio frame.

## Patentansprüche

1. Verfahren zum Einfügen eines Dienstkanals in einen plesiochronen Block dieses Dienstkanals, wobei das Verfahren gleichfalls auch darin besteht, einen Blocktakt zwischen einem Sender und einem Empfänger dieses Rahmens zu übertragen, wobei das Verfahren darin besteht, in dem Rahmen beim Empfänger mindestens einen Platz zu reservieren, der für den Transport der Daten des Dienstkanals bestimmt ist, **dadurch gekennzeichnet, dass** es darin besteht:
• beim Sender:
i - Blöcke (B) des Dienstkanals in den reservierten Platz einzufügen, indem man jedem dieser Blöcke (B) eine zuvor festgelegte Anzahl n1 identischer Bits (D), die als Startbits bezeichnet werden, vorausgehen lässt und indem dabei die folgenden Regeln eingehalten werden:
- falls keine Notwendigkeit besteht, den restlichen Platz aufzufüllen, wird das Verfahren beim Schritt i für einen neuen Block (B) wieder aufgenommen;
- falls die Notwendigkeit besteht, den restlichen Platz aufzufüllen, lässt man jedem der Blöcke (B) eine Anzahl n2 identischer Bits (F). die als Stoppbits bezeichnet werden, folgen, wobei sich die Stoppbits (F) von den Startbits (D) unterscheiden, und das Verfahren wird beim Schritt i für einen neuen Block (B) wieder aufgenommen;
• beim Empfänger:
- das regelmäßige Erscheinen der Startbits (D) oder das regelmäßige Erscheinen der Startbits (D), welchen Stoppbits (F) vorausgehen, zu erkennen, um entscheiden zu können, ob die Blöcke (B) an den reservierten Plätzen vorhanden ist, und um diese Blöcke (B) aus den reservierten Plätzen auszulesen.

2. Verfahren nach Anspruch 1, **dadurch gekennzeichnet, dass** der Rahmen ein Funkrahmen ist.

3. Verfahren nach Anspruch 1 und 2, **dadurch gekennzeichnet, dass** die Blöcke (B) Bytes sind.

4. Übertragungsvorrichtung für einen Rahmen und einen plesiochronen Dienstkanal dieses Rahmens, wobei die Vorrichtung auch die Übertragung eines Blocktakts zwischen einem Sender und einem Empfänger des Rahmens übernimmt, wobei der Blocktakt die Möglichkeit bietet, Blöcke aus dem Dienstkanal des Rahmens auszulesen, **dadurch gekennzeichnet, dass** er aufweist:
• beim Sender:
- Vorrichtungen zum Einfügen (15) von Blöcken (B) des Dienstkanals in reservierte Plätze des Rahmens;
- Vorrichtungen zum Einfügen (14, 15) einer zuvor festgelegten Anzahl n1 identischer Bits (D), die als Startbits bezeichnet werden, vor jedem der Blöcke (B), wobei auf einen eingefügten Block (B) entweder n1 andere Startbits (D) folgen, falls der restliche Platz aufgefüllt werden muss, oder eine Zahl n2 identischer Bits (F), die als Stoppbits bezeichnet werden, falls der restliche Platz nicht aufgefüllt werden muss, wobei sich die Stoppbits (F) von den Startbits (D) unterscheiden;
• beim Empfänger:
- Vorrichtungen zum Erkennen des regelmäßigen Erscheinens der Startbits (D) oder des regelmäßigen Erscheinens der Startbits (D), welchen Stoppbits (F) vorausgehen, wobei diese Erkennungsvorrichtungen einen Bittakt (HORL), einen Blocktakt (SYNC) sowie die Daten (BIN) des Dienstkanals liefern.

5. Vorrichtung nach Anspruch 4, **dadurch gekennzeichnet, dass** der Rahmen ein Funkrahmen ist.
